# EUROPEAN PATENT APPLICATION

(11) **EP 4 592 876 A1**
(43) Date of publication of application: **30.07.2025**
(21) Application number: 23933287.7
(22) Date of filing: 18.04.2023
(51) Int. Cl.: G06F 21/44, G06F 21/86, G07F 17/32

(54) **RANDOM NUMBER GENERATION DEVICE FOR AUTHENTICATION OF RESULTS IN ELECTRONIC LOTTERY SIMULATORS, GAMES OF CHANCE AND GAMES OF SKILL (SLJAH) DEPLOYED ON COMPUTERS**

(71) Applicant: PR TECHNOLOGIES SISTEMAS E INTERMEDIAÇÃO DE NEGÓCIOS LTDA, 04548-004 São Paulo - SP (BR)
(72) Inventor: ESPINDOLA, Valter Luiz Freire De, 06763-015 Taboão da Serra - SP (BR); CRUZ, Leandro Camacho Da, 02912-000 São Paulo - SP (BR); RENJIFFO, Moisés Peres, 02634-000 São Paulo - SP (BR); FERREIRA, Marcos Grégio, 04342-090 São Paulo - SP (BR); FERREIRA, Márcio Grégio, 04152-101 São Paulo - SP (BR); FREITAS, Ismael Gonçalves De, 02960-060 São Paulo - SP (BR); SILVA, Miguel Luís Da, 04849-006 São Paulo - SP (BR)
(74) Representative: Torner, Juncosa I Associats, SL
(86) International application number: PCT/BR2023/050122
(87) International publication number: WO 2024/216350

(57) **Abstract**

The device, object of this patent application, consists of a sheet metal cabinet that houses an electronic printer circuit, a print tray with concealment that prevents the visualization of the printed content, with anti-tampering sensors and sensors for opening and/or tampering with the cabinet. The purpose of this device is to authenticate in an indisputable way the results of lottery, gambling, or skill simulators that rely on random numbers for the implementation thereof. The device produces random numbers, prints them on thermal paper in the shape of a coupon, and sends this print to a tray that hides the content, but allows the presence of the coupon to be seen. Only then, the same printed numbers are sent to the simulator, which will make use of them to process the game. At the end of the extraction/start-up, the device will move the coupon out of the cabinet, allowing access. The interested party will then be able to check the numbers printed on the coupon against those presented on the monitor or other means of displaying the results in the simulator.

## Description

### FIELD OF THE INVENTION

This is the invention of an electronic-mechanical device for the immediate and independent authentication of the results produced by lottery, gambling, and skill simulators (ELGCS), with application in the area of games that partially or entirely depend on random numbers for the implementation thereof, and which for this purpose use random or pseudorandom number generators implemented by software processed by computers or other digital electronic circuits.

### CURRENT STATE OF THE ART

Currently, ELGCSs, in many or all of their current implementations, need to produce elements of the game at random, in a random or pseudorandom manner, whether these elements are numbers, or any type of graphic symbols. All existing ELGCS implement chance and unpredictability in their games by means of random or pseudorandom numbers. These numbers can be produced in two different ways: through natural entropy, or "natural randomness": in the real world, there are many factors involved in calculating the probability of a specific outcome of, say, a dice game, for example. Factors such as air direction and velocity, surface level, launch angle, and countless more must be considered.

Thus, "real" random number generators reflect this entropy, this natural disorder. These generators are denoted by the acronym TRNG, from the English, *True Random Number Generators* (True Random Number Generators). Another possible way to produce haphazard/random numbers is not to take natural entropy into account. To compensate for the absence of entropy and thus simulate authentic randomness, an initial value, commonly known as a "seed," is used, which will be applied to an equation (formula). Using this method, an equation (formula) is able to create a sequence of haphazard/random numbers that do not present any predictability patterns. This type of generator is known by the acronym PRNG, from the English, *Pseudo Random Number Generators* (PseudoRandom Number Generators). For technical convenience, most ELGCSs employ the latter, the PRNG, which can be obtained by means of countless formulas and mathematical methods, and which can be implemented with some ease in algorithms and be converted into executable code by a computer through some programming language. Random number generators, as the name implies, produce only numbers, exclusively real numbers.

As an example, in a slot machine simulator with digital-electronic control, with 3 reels with 10 symbols per reel. For each of the 10 symbols, a permanent identifier number is assigned, say from 1 to 10. The PRNG then produces any random number, between 1 and 10, for each of the three reels; this produces a result made up of 3 random symbols, all of which are assigned independently of each other. If, by chance, they form one of the winning combinations provided for in the rules of the game, then the machine will pay out for that specific combination.

Currently, all the stages of the processing of a game in an ELGCS occur internally in the software that implements the PRNG, eventually (depending on the nature of the game) formatting the numbers obtained in the execution of the PRNG to a configuration more suitable for processing (e.g., converting to an integer, and in this process eliminating any repetitions), reviewing the combinations and determining if there are winning combinations, presenting the result to the user, and making the eventual payment of the winnings. All of this occurs internally within the ELGCS software.

### LIMITATIONS OF THE CURRENT STATE OF THE ART

There are technical problems that have not yet been solved in the current state of the art. Currently, the entire process, due to its electronic-digital nature, takes place internally at ELGCS, away from the user's sight, who does not have reliable, immediate, direct, and objective ways to ensure that ELGCS effectively produced the presented results without any interference other than strict compliance and adherence to the rules of the lottery/game implemented at ELGCS, rules that are previously known to the user.

The current ELGCSs do not have any provision to prove/demonstrate to their users that the combinations presented to them at the end of each draw/game are free of any flaws or interferences that might in some way alter the sequences of random numbers produced by the random number generator algorithms, from the initial generation process, through validation, transport, and display, and that could impose any changes to the result presented to the user compared to the original results obtained immediately after the generation of random numbers, whether such changes are the product of improper and intentional manipulation, in disagreement with the rules of the game known to the user, or due to defects and malfunction of the equipment; and the absence of this evidence constitutes an important functional limitation of the current ELGCSs: modern legislation and administrative practices are moving towards requiring greater transparency from companies towards consumers of any goods and services, and the sector of manufacturing and marketing of ELGCSs is still characterized by the (in)voluntary lack of transparency in the processing and presentation of the results of their sweepstakes and games, as there is currently no technology available for users, and not even for inspection authorities, to authenticate in a simple, effective, fast, and direct way the results produced by ELGCSs, other than resorting to complex, costly, and time-consuming forensics and investigations.

### COMPARISON OF THIS DEVICE WITH THE CURRENT STATE OF THE ART: IMPORTANT LIMITATION ELIMINATED WITH SIGNIFICANT ADVANTAGE FOR THE MANUFACTURERS OF ELGCSs AND USERS THEREOF AND FOR THEIR INSPECTION

This device addresses the questionable authenticity and transparency of the results produced in the ELGCSs. In general terms, this device produces a sequence of random numbers, which is promptly and immediately sent to a printer, which reproduces this sequence on thermal paper-paper coupon, which is then internally moved within the device's cabinet to a print tray with concealment equipped with anti-tampering measures, which setup allows for the external and partial visualization of the unprinted sections, unequivocally demonstrating to the user that the sequences of random numbers that will be used by the ELGCS in the draw/game that has just begun have already been produced, are already printed, and can no longer be altered. These sequences will be presented to the user at the end of each draw/game, simultaneously with the presentation of the results by the ELGCS.

Immediately after ensuring that the printing and the transfer to the concealed print tray have been completed, the device sends the same sequences to the ELGCS, which only then will be able to start the draw/game process, and should use only the numbers of the sequences and in the same order of receipt to perform the checks aimed at determining the combinations formed, whether winning or not, always in accordance with the rules published for the game in question, and finally present them to the user. At the end of the draw/game, the device will guillotine the coupon and move it to the device's exit slot, at which point the user will have access to the coupon with the printed sequences that were initially generated, even before the ELGCS has access to them, and will then be able to compare the sequences produced by the device against those presented by the simulator, which must be strictly identical.

Thus, the device object of this patent application eliminates the intrinsic limitation, the inability of the current ELGCSs to authenticate the results, in the sense of being free from interference, alterations, or defects imposed by the processing, intentionally or not, by means of an external mechanism that offers independent authentication of the results presented. This is because the production of sequences of random numbers that result in winning or non-winning combinations will occur externally and independently of the ELGCSs, which will only passively receive the sequences of random numbers for processing, and even then only after these same sequences have been printed in advance, thus becoming unalterable and irreversible, and made available in an opaque form, for partial viewing by the user until the completion of the draw/game. The device, due to its external and independent nature, operates and is compatible with any ELGCSs capable of communicating externally by means of standard and widespread-use interfaces. To make use of this device, the simulators must be modified only to the extent of inserting into their respective software the necessary code to implement the security protocol to command the device and receive from it the sequences of random numbers and the necessary operational and safety information.

Thus, the device is an important new technological implementation with an original and innovative application, and so far non-existent and without any similar ones, positively and comprehensively impacting the state of the art. The innovation occurs through the early presentation of the result of the draw/game, even before it has been completed, and at that moment, visually informing the user of the existence of an already irreversible result, without, however, making them aware of it until the end of the draw/game, thus offering the manufacturers of ELGCSs, their users, and even the regulatory authorities, an immediate, simple, straightforward, and low-cost method for authenticating the results produced by the ELGCSs, ensuring that these results faithfully reflect the initially generated random numbers, without any control by the ELGCS, other than to request the generation of the sequence. The result displayed on the ELGCS result screen/result display medium must be identical to the one shown on the coupon, which was printed before the start of the draw/game.

### BRIEF DESCRIPTION OF THE DRAWINGS

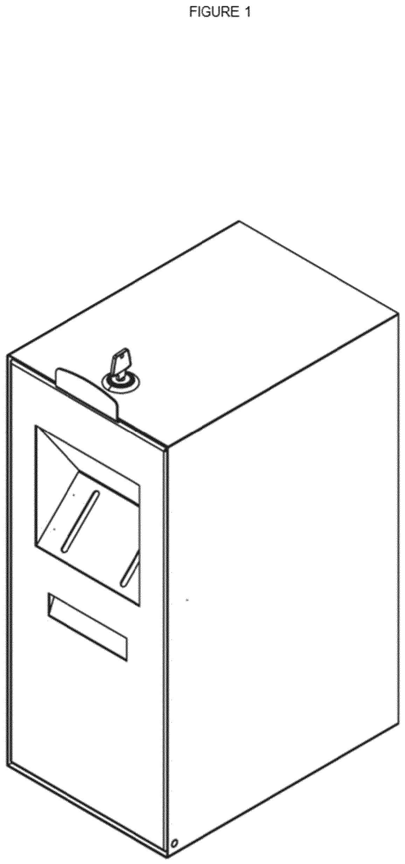

Figure 1 - Front view of the device.
Figure 2 - Left diagonal front exploded perspective of the device.
Figure 3 - Side-section perspective of the device - View A: Closed front tilting lid - View B: Open front tilting lid, tilted forward.
Figure 4 - Perspectives of the print tray with complete concealment.
Figure 5 - Perspectives of the print tray components with concealment without a lid.
Figure 6 - Detail of the temporary positioning of the thermal paper coupon.
Figure 7 - Details of the tilting of the front cover of the cabinet and printer support.
Figure 8 - Block diagram of the micro controlled electronic circuit.
Figure 8a - Diagram of the power supply and voltage regulator circuit.
Figure 8b - Microcontroller and external memory.
Figure 8c - Sensor controller circuits.

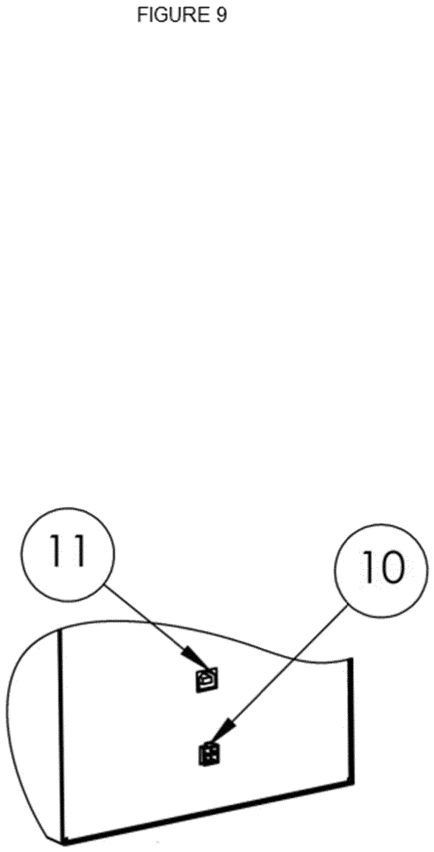

Figure 9 - Detail of the lower back of the device cabinet, power connection, and USB connector.
Figure 10 - Logical flow of the ELGCS-device interaction - Part 1.
Figure 11 - Logical flow of the ELGCS-device interaction - Part 2.
Figure 12 - Logical flow of the ELGCS-device interaction - Part 3.
Figure 13 - View of the typical installation of an ELGCS attached to the device.
Figure 14 - Thermal paper coupon layout.

### DETAILED DESCRIPTION OF THIS INVENTION

Detailed description of this invention. This device is a unit that offers complementary and parallel processing to the lottery and gambling and skill simulators (ELGCS) connected to same. The purpose of the device is to ensure that the sequences of random numbers provided by the micro controlled electronic circuit that equips the device, requested by the ELGCS, are effectively received, processed, and presented to the user by the ELGCS, without the possibility of any change in content and/or sequential order during processing by the simulator.

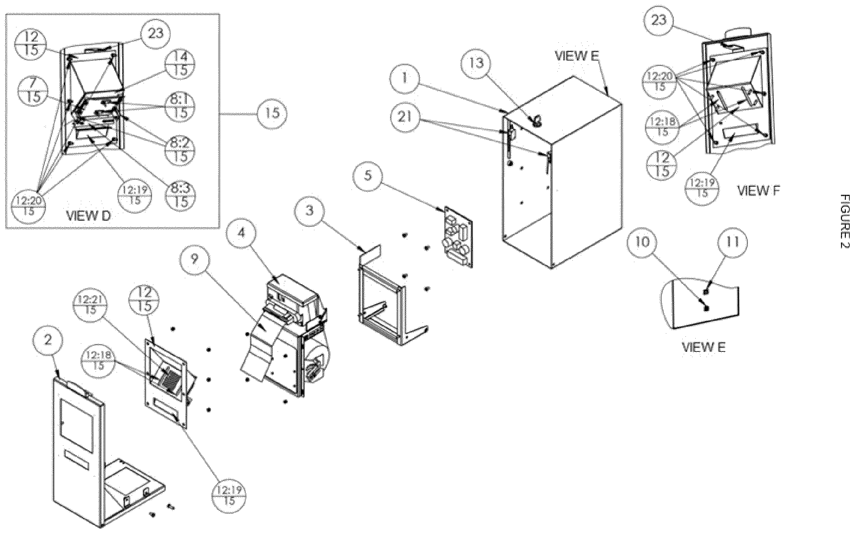

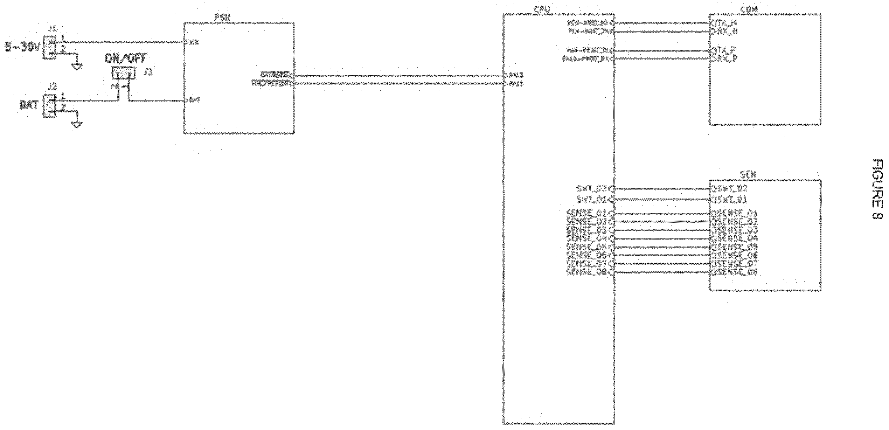

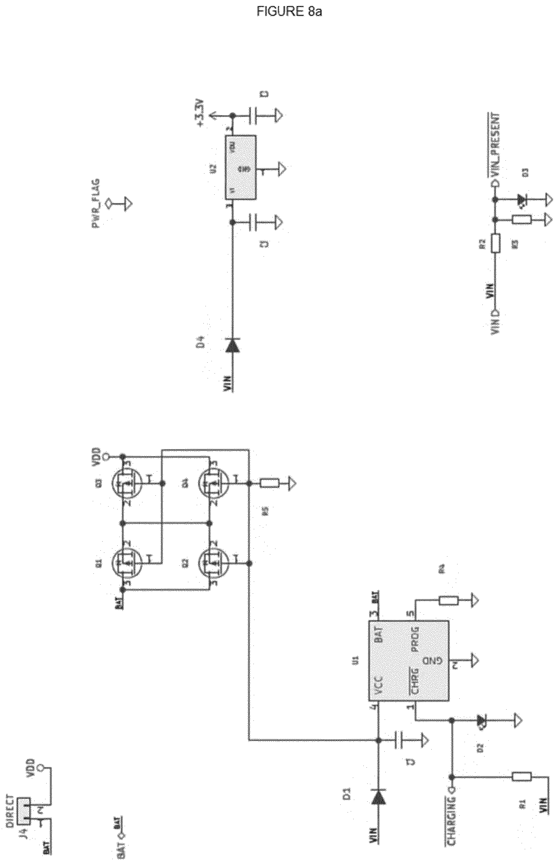

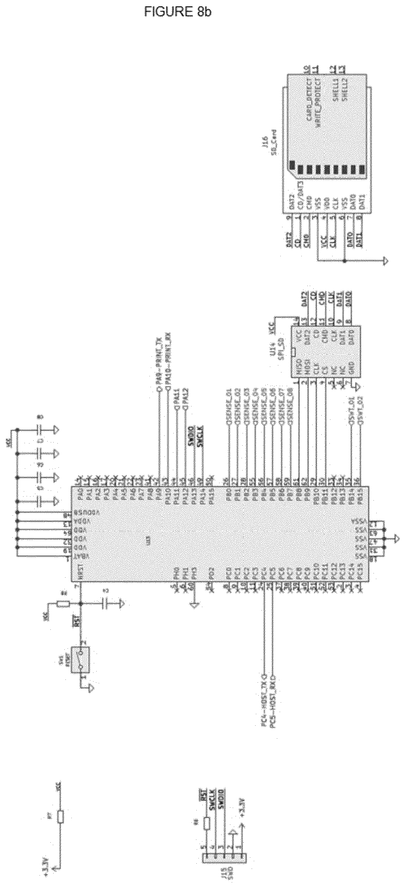

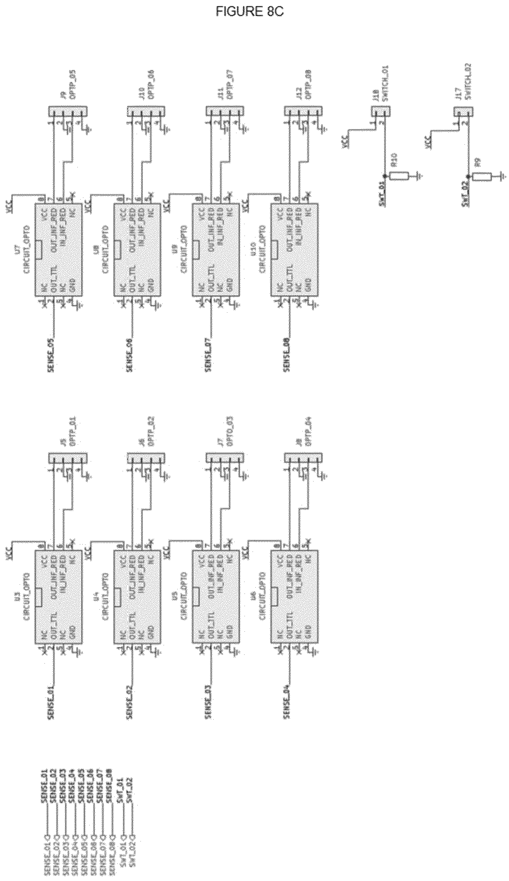

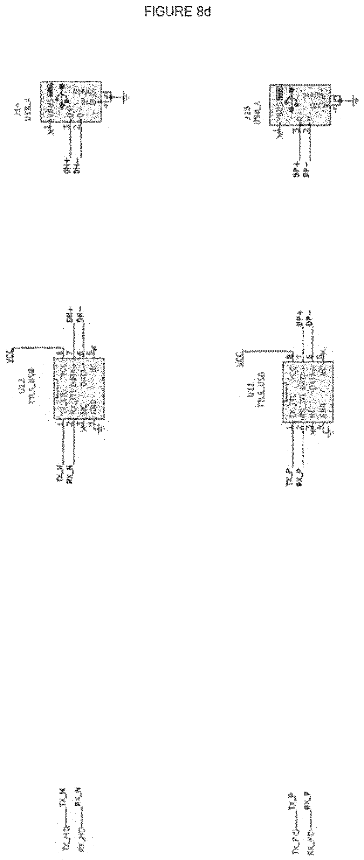

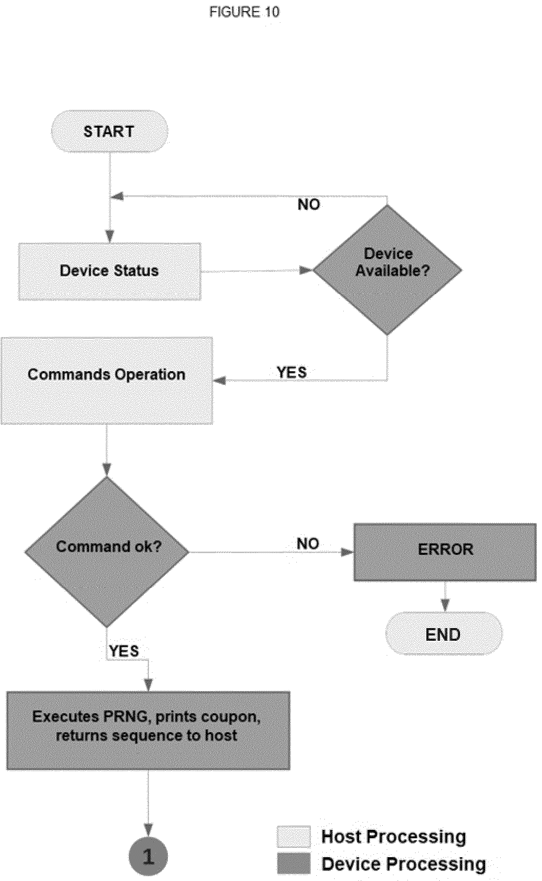

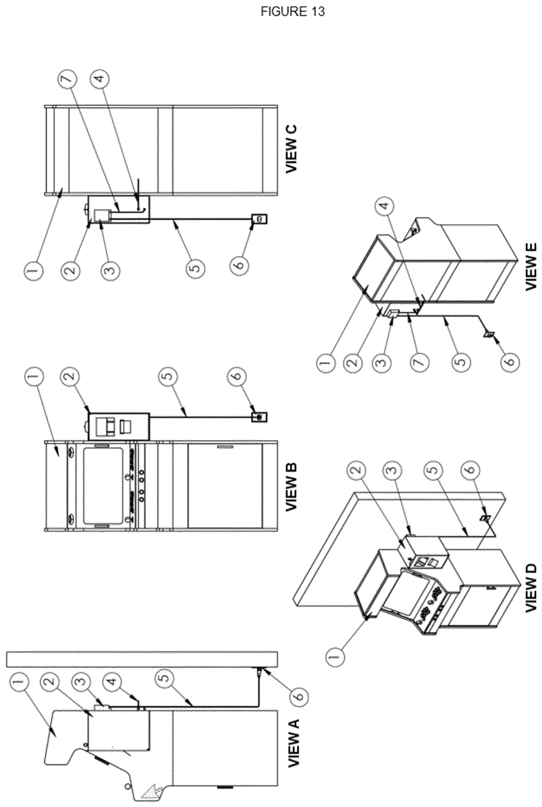

The ELGCS (Fig. 13 - VIEWS A, B, C, D, and E - (1)) starts the process by sending a Status Check Command (Fig.10), which will be received by a USB-Serial port Fig. 8d (U12) and sent to the CPU (Fig. 8, (CPU), (Fig. 8, (U13) of the electronic circuit (Fig.2 (5)), (Fig. 15), of the device, (Fig. 13 - VIEWS A, B, C, D, and E, (2)), by means of a security and proprietary protocol, with exclusive knowledge of ELGCS and the electronic circuit of the device. For this command, one of two possible responses will be returned to the ELGCS via the USB-Serial port Fig. 8d (U12), or else no response will be returned at all: YES or NOT AVAILABLE (Fig. 10); If the return is NOT AVAILABLE, the ELGCS must then follow the logical flow it deems most appropriate to handle that status: continue sending the same command until the device becomes AVAILABLE, or interrupt the operation thereof.

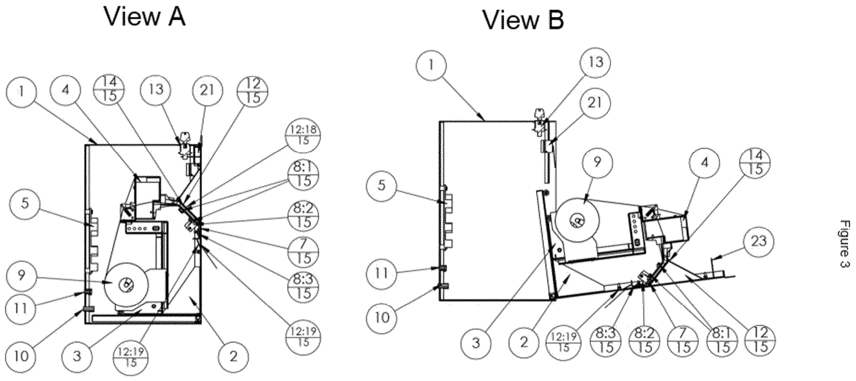

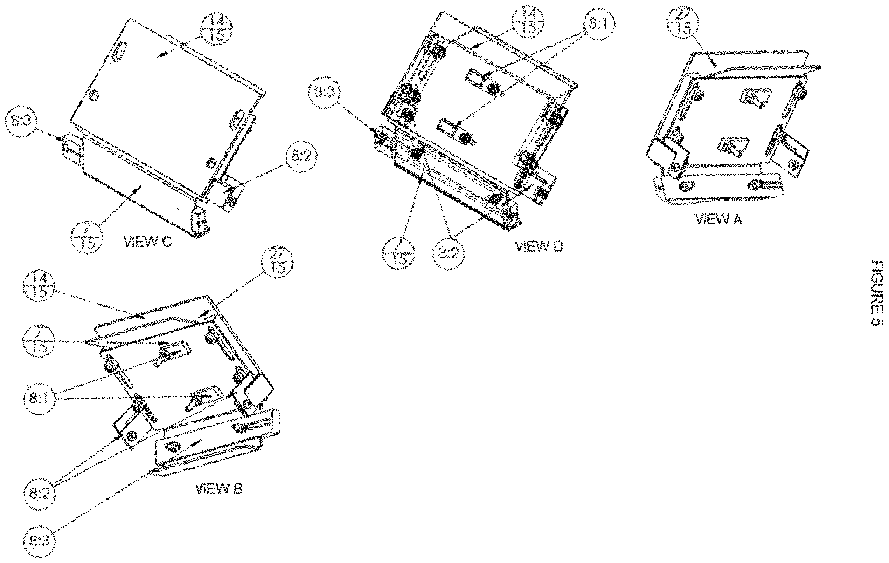

The reasons for the interface returning a NOT AVAILABLE are: Cabinet cover opening/tampering sensors (Fig. 2(21) and Fig. 3(21)) activated and monitored by the electronic circuit by means of the subcircuit Fig. 8c (SWT_01 and SWT_02). Optoelectronic sensors for presence and limit switch (Fig. 5 -VIEW B - (8:1/15)) of the thermal-paper coupon activated and monitored by the respective controller - Fig. 8c (U5); and/or Optoelectronic sensor for protection against invalid, premature, and/or unauthorized access to the thermal-paper coupon Fig. 5 - View B - (8:2/15)) activated and monitored by the respective controller - Fig. 8c (U5); This sensor has a dual function: (A) Confirmation of valid delivery to the user of the thermal paper coupon and (B) Redundancy layer to protect against attempted invalid, premature and/or unauthorized access to the thermal paper coupon (Fig. 5 - VIEW B (8:3/15)) triggered; Other reasons for the device to return NOT AVAILABLE are: Lack of paper in the printer (Fig. 2 (9)) or any error in the printer (Fig. 2 (4)). For each error, the device's electronic circuit returns a unique and specific numerical error code. And in the event that there is no response, there was a communication failure, the device's electronic circuit is without power, or there is a general failure.

If the response of the device's electronic circuit to the ELGCS is YES AVAILABLE, presented in the form of a unique and specific numerical code, the ELGCS will then send the Operation Command (Fig. 10); Upon receiving this command, will the device's electronic circuit execute an OK COMMAND again? (Fig.10) internally, which consists of the same tests performed in the Status Check command described above; Additionally, and unlike the Status Check Command, the Operation Command requires parameters formatted in a manner consistent with the communication protocol for the execution thereof, so the device's electronic circuit verifies the form and content of the command. In the event that the electronic circuit finds any inaccuracy or inconsistency in any of the checks, it will respond to the ELGCS with a unique and specific numerical error code, deeming the Operation Command closed.

If the check does not present errors, the electronic circuit of the device starts the Operation which consists of 4 stages. (1) Generation of a sequence of random numbers. (2) Log storage on an SD memory card, Fig. 8b (J15) of the complete sequence, date and time of sequence generation, and sequential identifier number of the sequence. (3) Printing of the sequence on a thermal paper coupon. (10); (4) Availability of the sequence for ELGCS.

Step (1) produces by means of the CPU, Fig. 8b (U13) the generation (Fig. 10), of a sequence of "k" random, positive, and integer numbers, of up to three digits "jjj", where "k">0 & "k"<=200 e "jjj" >0 & "jjj"<=200; (Where "k" and "jjj" are determined by the ELGCS in the Operation Command); This is the execution of the code that implements the PRNG algorithm MT19937 Mersenne Twister. Bibliography: T. Nishimura, "Mersenne Twister: A 623-dimensionally distributed uniform pseudorandom number generator," ACM - Transactions on Modeling and Computer Simulation Vol. 8, No. 1, January pp.3-30 1998.

Logging on a non-volatile SD memory card, Fig. 8b (J15) of the complete sequence, date and time of sequence generation, and sequential identifier number of the sequence. Depending on the storage capacity of the selected memory card, the system will be able to keep records of up to 300 million complete sequences of 100 numbers each, with the respective date and time of generation and a sequential number identifying the corresponding sequence.

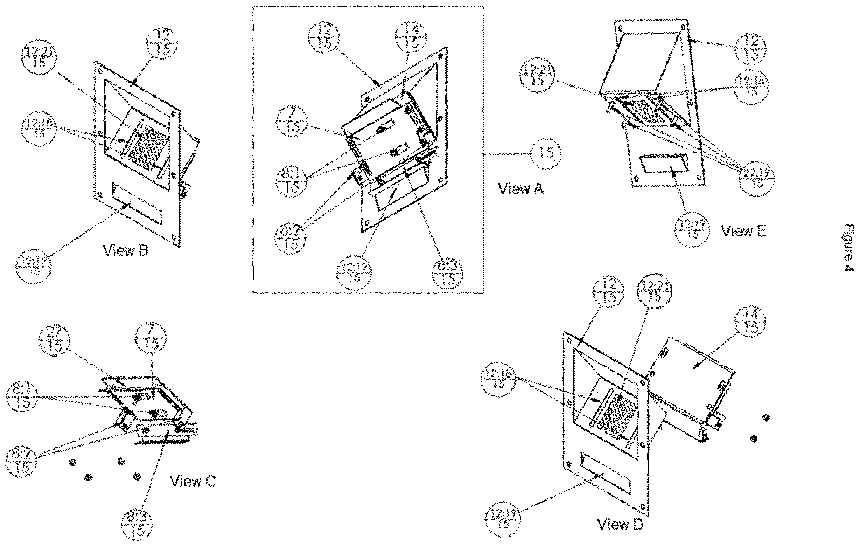

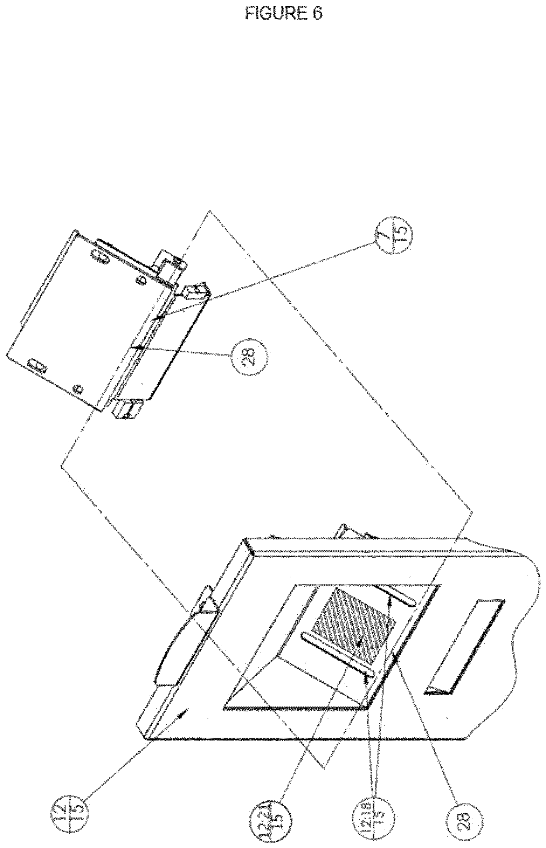

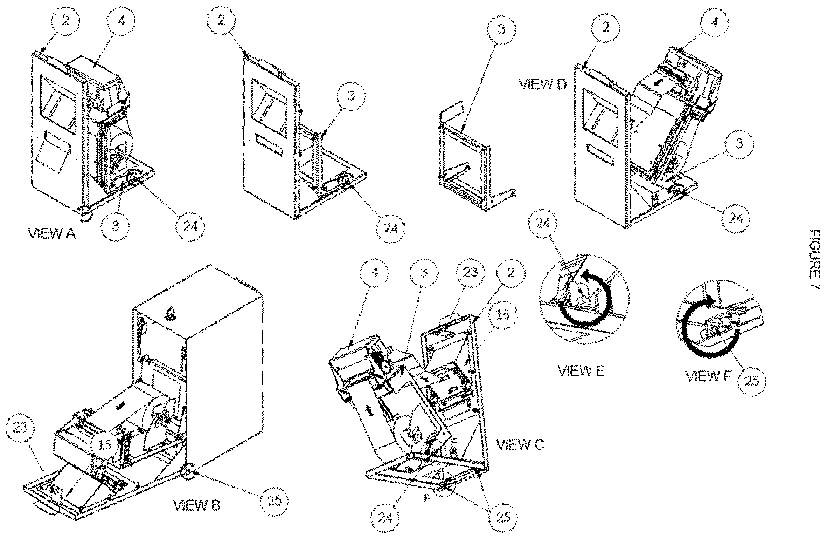

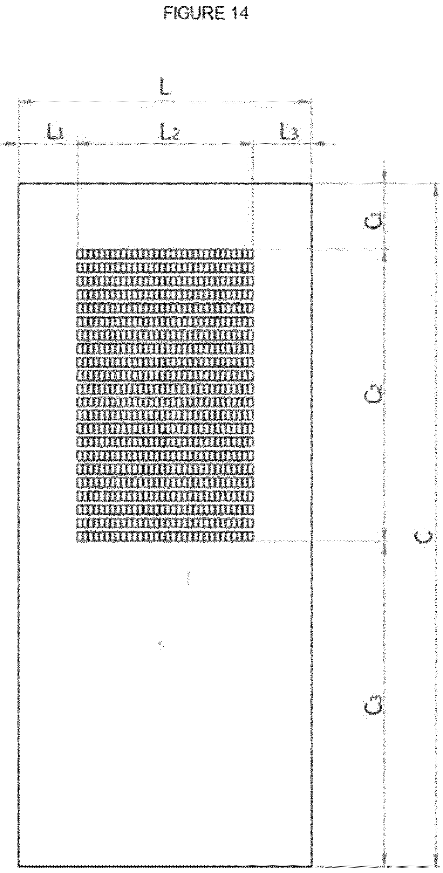

Step (2) consists of the print command, through the Serial-USB port Fig. 8d (U11), of the entire sequence, in the order in which it was produced by the thermal paper printer. (Fig. 2 (4)), (Fig. 7 (4)). As it is being printed, the thermal paper coupon is moved, with the printed usable area facing upwards, through the guide (Fig. 4 VIEW C, (27:15) of the print tray with concealment - (Fig. 4 VIEW A (15)), Fig. 14 (C2). When the entire usable area (Fig. 14 (C2)) has been printed, the device concludes step (2), temporarily halting the movement of the thermal paper coupon. The correct arrangement of the thermal paper coupon is signaled to the electronic circuit through the sensors Fig. 5 (8:1). In this condition, the printed usable area (Fig. 14 (C2)) remains at rest inside the concealed print tray (Fig. 4 VIEW A (15)) with its lower end positioned immediately over the 45° angle of the lower ramp of the concealed print tray (Fig. 6 (7:15)), thus being hidden from external view by the horizontal alignment of the lower end of the printed usable area with the lower end of the central area of the concealed print tray cover, (as illustrated by the projection of the concealment plane (Fig. 6 (28)), which overlays the (Fig. 6, (12:21/15)) existing between the portholes (Fig. 6 (12:18/15)), onto the printed usable area.

The correct positioning under (Fig. 6, XX)) of the entire printed useful area results in an important achievement: Through the side portholes (Fig. 6, (12:18/15)) it is possible to ascertain that the paper containing the sequence of random numbers that will be used in the draw/game by the ELGCS is in the tray, but completely and temporarily concealed by the metal screen (Fig. 6 (12:21/15)). (In the lateral portholes, only segments of the non-printed margins can be seen Fig. 14, (L1 with length C1+C2) and (L3, with length C1+C2). At this moment, at the request of the ELGCS, by means of the security and proprietary protocol, with exclusive knowledge of the ELGCS and the electronic circuit of the device, it starts and concludes step (3) of the Operation, in Fig. 10: The return to ELGCS of the sequence of random numbers generated and already printed. The ELGCS will then process the returned sequence according to its convenience and need, but it must restrict itself to the content and order thereof, as we will see below.

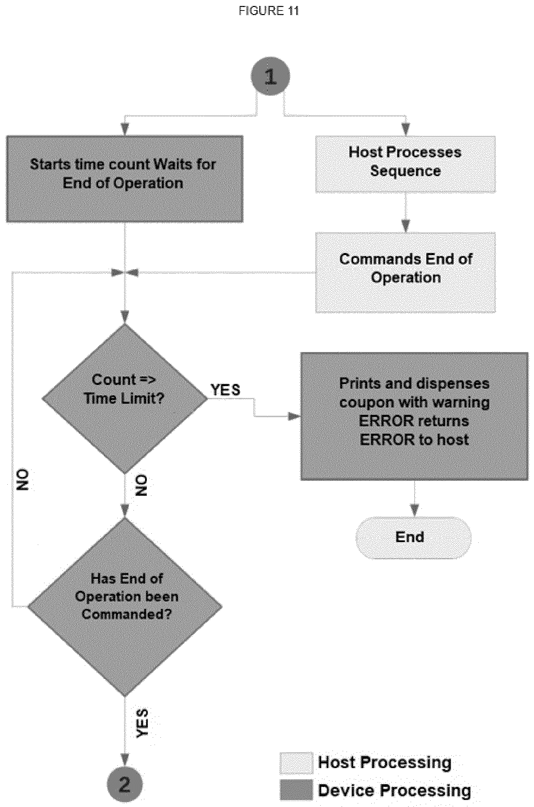

Upon completion of step (3) above, the device's electronic circuit starts counting a timeout period (Fig. 11), during which it must receive the End-of-Operation Command from the ELGCS. There are two possibilities in this step: (a) when the timeout period elapses without the electronic circuit of the device receiving the End of Operation Command, it will enter the Operation Error state and perform the following actions: (1) Command the printing of the word "ERROR" in the margin (Fig. 14, C1), between the margins (FIG. 14 (L1 and L2)), and will return a numeric, ELGCS-specific error code.

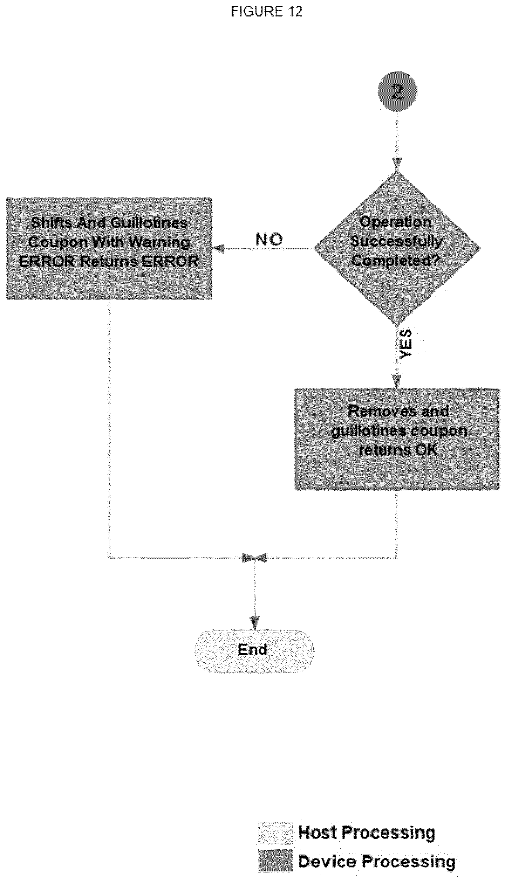

The other possibility while waiting for the electronic circuit of the End of Operation Command device is (b) Receiving the Command before the timeout has elapsed. By issuing this command to the electronic circuit of the device, the ELGCS has already completed the current draw/game, employing the sequence provided by the electronic circuit of the device in the Operation Command, and determined whether there were winning combinations or not, and presented them to the user. Upon receiving the End of Operation Command, the following steps will be performed (Fig. 12): (1) move 89 mm of unprinted paper from the upper lower edge of (FIG. 14 (C2)), until the printed usable area is fully exposed on the outside of the device through the slot (Fig. 7 (12:19/15)); (2) guillotine the paper, in the form of a coupon, allowing the user access to same; and (3) return to the ELGCS a unique and specific numerical success code, terminating the End of Operation Command (Fig. 12).

If, during the execution of the End of Operation Command, there occurs any error, the electronic circuit of the device will start the Operation Error state and perform the following actions: (1) It will command the printing of the word "ERROR" in the margin (Fig. 14, C1), between the margins (FIG. 14 (L1 and L2)), and will return a numeric, ELGCS-specific error code.

If the operation has been successfully completed, the user will be in possession of the coupon containing the sequence of random numbers that must have been used by ELGCS, with the same content and in the same order. The user will be able to verify that the combinations presented, whether winning or not, are the same as those independently produced by the device, the content and order of which were already printed before being provided to ELGCS. This is an important and unmatched achievement to date: The user will be able to immediately and instantly authenticate the results of the draw/game that has just ended, checking the content and order of the sequence on their coupon against the results that are being presented on the screen, or in any means of making results available offered by ELGCS. And which must necessarily be the same. The only possible hypothesis of divergence between the results of the draw/game presented by ELGCS and the content of the coupon produced by the device is if, during the processing by ELGCS, there has been any modification, alteration, interference, or even defect in ELGCS, characterizing an irreparable defect.

The device requires minimal maintenance, only replacement of the thermal paper coupon reel. Fig. 7 demonstrates how to access the interior through the front cover of the cabinet. VIEW A is a perspective of the closed tilting front door of the cabinet, 90° from the perpendicular plane. (Fig. 7 (2). Tilting support of the printer, also at 90° of the perpendicular plane. Fig. 7 (3). In this situation, the front tilting cover of the cabinet will be opened by rotating about the pivot point counterclockwise, and the tilting support of the printer will only move in a clockwise motion of the pivot point (Fig. 7 (24)).

Fig. 7 VIEW B denotes the front tilting cover of the cabinet as well as the printer holder, open, at 0° from the perpendicular plane. This position is intended to allow access for maintenance/replacement of the electronic circuit board, which is located on the fixed rear cover of the case, in a vertical position. And also allow easy and direct access to the thermal paper coupon-roll. The pivot point of the front tilting cover of the cabinet Fig. 7(25) denotes that in this position, the only possible pivoting movement will be clockwise.

## Claims

1. Random number generator device for authentication of the results of electronic lottery and games of chance and skill simulators (ELGCS) implemented by digital computers, wherein the device comprises print tray with concealment and anti-tamper security; composed of the following components: external cover with portholes and exit slot for coupon and external metal shield auxiliary for concealment of thermal paper-coupon; top counter-cover in transparent PETG with the purpose of preventing unauthorized access to the thermal coupon paper displayed in the portholes; print tray guide; stainless steel bottom ramp for thermal paper coupon rest; optoelectronic sensors for the presence and limit switch of the thermal paper-coupon; optoelectronic sensor to protect against an attempt at invalid, premature and/or unauthorized access to the paper/coupon; dual-function optoelectronic sensors: (1st) for the confirmation of the exit of the thermal coupon paper and (2nd) redundancy of the protection against invalid, premature, and/or unauthorized access attempts to the thermal coupon paper.

2. Random number generator device for authentication of the results of electronic lottery and games of chance and skill simulators (ELGCS) implemented by digital computers, according to claim 1, wherein the device comprises electronic circuit and light-emitting diodes (D2 and D3), resistors (R1, R2, R3, R4 and R5, R6, R7, R8, R9, R10), capacitors (C1, C2 and C3, C4, C5, C6, C7 and C8), transistors (Q1, Q2, Q3 and Q4), battery charger IC (U1), voltage regulator IC (U2); IC microcontroller (U13); IC SPI controller for SD Card (U14); IC electrical level converter for optoelectronic sensors (U3, U4, U5, U6, U5, U8, U9 and U10); Microswitch (SWT _01, SWT, SWT_02); serial-USB communication ports (U11 and U12).

3. Random number generator device for authentication of the results of electronic lottery and games of chance and skill simulators (ELGCS) implemented by digital computers, according to claim 2, wherein the communication with ELGCSs is made by means of proprietary communication protocol, configured to perform the following functions previously stored in the form of firmware: consistency check of electronic circuit functions, generation of pseudorandom numbers; formatting/normalization of these pseudorandom numbers; creation, maintenance and storage of the sequence diary, respective dates and times of generation, and sequential identifier number; monitoring of security sensing on the print tray; preservation of the physical integrity of the tray; printing of sequences of pseudorandom numbers, monitoring of the displacement of the thermal paper, from the moment of printing to the effective delivery to the user.

## Amended claims

### Amended claims under Art. 19.1 PCT

1. Random number generator device for authentication of the results of electronic lottery and games of chance and skill simulators (ELGCS) implemented by digital computers, wherein the device comprises print tray with concealment (15) and anti-tamper security; consisting of the following components: external cover with portholes (12:18/15) and exit slot (12:19/15) for coupon (9) and external metal screen (12:21/15) assisting in the concealment of the thermal-paper coupon; transparent PETG upper back-cover for preventing unauthorized access to the thermal-coupon paper displayed in the portholes; guide (27:15) of the print tray; stainless steel bottom ramp (7:15) for resting the thermal-coupon paper; optoelectronic sensors for presence and end-of-paper detection of the thermal-coupon paper (8:1/15); optoelectronic sensor for protection against invalid, premature, and/or unauthorized access to the paper/coupon (8:2/15); dual-function optoelectronic sensors: first for confirmation of the output of the thermal-coupon paper (9) and second for redundancy in protection against invalid, premature, and/or unauthorized access attempts to the thermal-coupon paper (9).

2. Random number generator device for authentication of the results of electronic lottery and games of chance and skill simulators (ELGCS) implemented by digital computers, according to claim 1, wherein the device comprises electronic circuit and light-emitting diodes (D2 and D3), resistors (R1, R2, R3, R4 and R5, R6, R7, R8, R9, R10), capacitors (C1, C2 and C3, C4, C5, C6, C7 and C8), transistors (Q1, Q2, Q3 and Q4), battery charger IC (U1), voltage regulator IC (U2); IC microcontroller (U13); IC SPI controller for SD Card (U14); IC electrical level converter for optoelectronic sensors (U3, U4, U5, U6, U5, U8, U9 and U10); Microswitch (SWT _01, SWT, SWT_02); serial-USB communication ports (U11 and U12).

3. Random number generator device for authentication of the results of electronic lotteries and games of chance and skill simulators (elgcs) implemented by 2/2 digital computers, according to claim 2, wherein the communication with ELGCSs is made by means of proprietary communication protocol, configured to perform the following functions previously stored in the form of firmware: consistency check of electronic circuit functions, generation of pseudorandom numbers; formatting/normalization of these pseudorandom numbers; creation, maintenance, and storage of the sequence diary, respective dates and times of generation, and sequential identifier number; monitoring of security sensing on the print tray (15); preservation of the physical integrity of the tray (15); printing of sequences of pseudorandom numbers, monitoring of the displacement of the thermal paper (9), from the moment of printing to the effective delivery to the user.
